# EUROPEAN PATENT SPECIFICATION

(11) **EP 1 268 950 B1**
(45) Date of publication and mention of the grant of the patent: **30.12.2009**
(21) Application number: 01906455.9
(22) Date of filing: 09.02.2001
(51) Int. Cl.: E04B 1/82, E04B 2/00, G10K 11/16

(54) **USE OF A CONNECTION DEVICE FOR CONNECTION AND SOUND INSULATION BETWEEN TWO PANEL SHAPED WALL UNITS**
VERWENDUNG EINER VERBINDUNGSVORRICHTUNG ZUR VERBINDUNG UND SCHALLDÄMMUNG ZWISCHEN ZWEI PLATTENFÖRMIGEN WANDELEMENTEN
UTILISATION D'UN DISPOSITIF DE CONNEXION POUR LA CONNEXION ET L'ISOLATION ACOUSTIQUE DE DEUX ÉLÉMENTS DE PAROI EN FORME DE PANNEAU

(30) Priority: 09.02.2000 SE 0000412
(43) Date of publication of application: 02.01.2003
(73) Proprietor: Setra Trälyftet AB, 105 22 Stockholm (SE)
(72) Inventor: MÖLLER, Tore, S-933 33 Arvidsjaur (SE); JAKOBSSON, Olle, S-112 50 Stockholm (SE); HIDEMARK, Bengt, S-112 20 Stockholm (SE); LJUNGGREN, Sten, S-114 48 Stockholm (SE); SAMUELSSON, Sture, S-114 21 Stockholm (SE)
(74) Representative: Hyltner, Jan-Olof
(86) International application number: PCT/SE2001/000275
(87) International publication number: WO 2001/059225

(56) References cited:
- EP-A- 0 378 986
- EP-A1- 0 367 857
- WO-A-95/23267
- WO-A-99/07966
- DE-A1- 19 745 840
- DE-C- 624 955
- DE-C- 921 943
- JP-A- 04 161 678
- JP-A- 10 317 718
- NO-B- 144 430
- US-A- 1 761 659
- US-A- 2 035 143

## Description

The present invention relates to the use of a connection device according to the precharacterizing clause of Patent Claim 1. The invention can be assigned but is not limited to the construction industry. This application is concurrent with Swedish patent application no. 0000411-9. (Publication: WO-A-0159228).

Today, connection devices of various types are used for connecting panel-shaped elements such as wall elements in buildings, vehicles, machines etc., and for preventing sound transmission between these. Large masses, such as barrier masses in, for example, refrigeration machinery systems, are also used for this purpose. Fitting connection devices in the form of strips or cushions of rubber, neoprene or the like between the wall elements is one course of action for preventing sound transmission between the panel-shaped elements.

Constructions of the barrier mass type generally suffer from the disadvantage of taking up far too much space to be capable of achieving satisfactory results.
DE-A- 624955 discloses a connection device having elastic members for solving the problem of the attenuation of vibrations and US-A-1 761 659 discloses a cylinder arranged between two receiving members being used for safety reasons against earthquakes.

The constructions in the form of strips or cushions generally suffer from the disadvantage of having great difficulty in taking up static loads. In the construction of, for example, a multi-storey building, it is important that settlement of the building is avoided. Moreover, known constructions involve demounting work being rendered more difficult.
DE 921 943 A discloses a connection device having a roller arranged between two concave plates mounted on construction elements. The use of the device in DE 921 943 A is related to carrying loads producing horizontal relative dislocation of the elements and the use is for stabilisation purpose, such as stabilising bridges, bearers etc.

Wall elements in buildings with supporting constructions made of concrete or wood form so-called "flanked" constructions with regard to sound insulation in the vertical direction. In a building, the sound transmission, or transfer, can be predominantly via flanked elements, such as said panel-shaped elements or wall elements. A plane so-called bending wave is propagated by means of inner forces and a moment in a wave front through the panel-shaped element according to a sound propagation direction. The forces are at right angles to the plane of the panel-shaped element, while the moment is centred about an axis which lies in a neutral plane of the panel-shaped element and in the wave front. It is important that said forces and said moment are not transmitted at the transition from one panel-shaped element to another, because these forces and the moment transmit an acoustic nuisance.
WO-A-9523267 discloses the use of a connection device bringing out connection between two panel-shaped elements lying on one another. The connection device is designed for protection against earthquakes.
JP-A-04161678 discloses the use of a cylindrical roller arranged with a flywheel for making a damping effect.

The object of the present invention is to produce a connection device which prevents said forces and said moment being transmitted from one panel-shaped element to another, while considerable static forces can be transmitted between the elements.

The object of the present invention is also that sound transmission between wall elements in buildings, vehicles, machines etc. can be prevented.

The object is also to improve the living environment in multi-storey buildings made of wood. Living in wooden houses is attractive today, and the market value of a property can be increased.

Another object of the invention is to reduce the manufacturing cost of, for example, wall elements for buildings.

A further object is to simplify the work during the construction of, for example, a multi-storey building.

The object of the invention is likewise to produce a connection device which acts in a self-centring manner.

The object is also that the connection device is to be easily demountable.

This is achieved by the use indicated in the introduction, wherein the connection device comprises the features of claim l's characterising part.

Further solutions for achieving the aim of the invention and further characteristics of the invention are indicated in the other patent claims.

The invention means that a connection device has been produced, which allows a certain movement in the direction transverse to the sound propagation direction, the propagation of structure-borne sound waves in the form of bending waves being prevented. The connection device hereby has the effect of reducing the sound propagation, which renders the living environment in a multi-storey building satisfactory.

The invention also means that running wiring between panel-shaped elements is made easier, which results in cost savings.

The invention also means that the mounting of one box unit in relation to another is made easier, because the connection device according to the invention acts in a self-centring manner. This in turn results in reduced construction costs.

The invention also means that demounting of one panel-shaped element from another is made easier.

The invention will be described in greater detail in the form of illustrative embodiments with reference to the accompanying figures, in which:
Fig. 1a shows diagrammatically a perspective view of a connection device according to a first embodiment.
Fig. 1b shows diagrammatically a front view of the connection device in Fig. 1a in the direction of the arrow p.
Fig. 1c shows diagrammatically a perspective view of a connection device according to a second embodiment,
Fig. 1d shows diagrammatically a front view of the connection device in Fig. 1c in the direction of the arrow q, and
Fig. 1e shows diagrammatically a front view of the connection device in Fig. 1a, in which a homogeneous cylinder has an oval cross section,
Fig. 2a shows diagrammatically a front view of the connection device according to the invention for connection of two panel-shaped elements,
Fig. 2b shows diagrammatically a front view of the connection device in Fig. 3a in a working position,
Fig. 2c shows diagrammatically an enlargement of what is shown in Fig. 3b,

Words such as upwards, downwards, vertically, horizontally etc. indicate directions and planes which describe the orientation of what is shown in the drawing, where what is shown has such an orientation as is usual in buildings when these are erected for use. Reference designations in figures corresponding to components which recur in the figures are not always described in the description. For the sake of clarity, components which are not relevant to the invention are not shown.

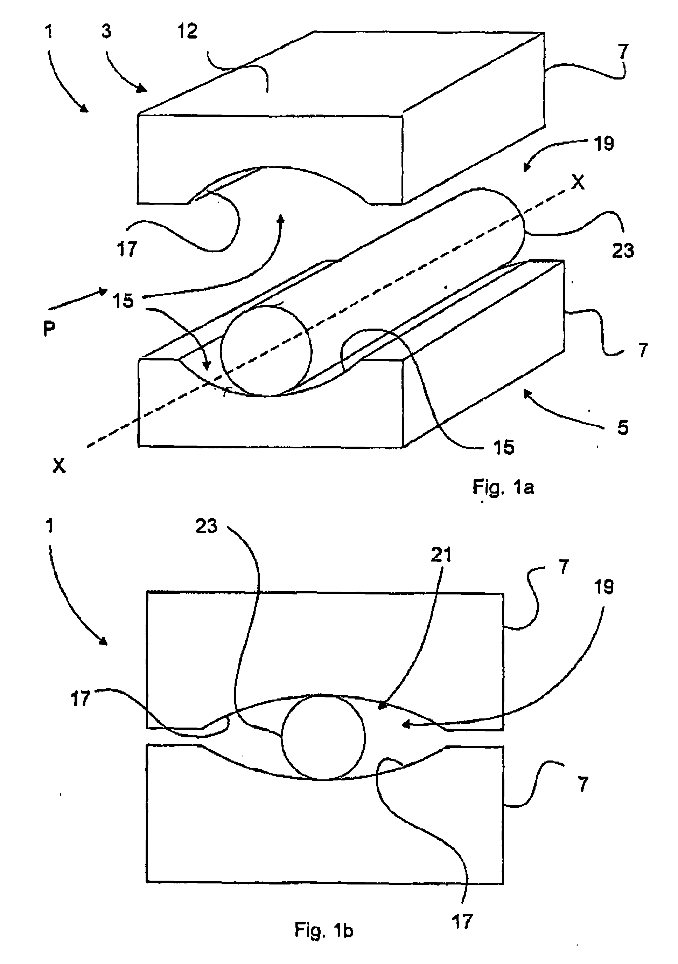

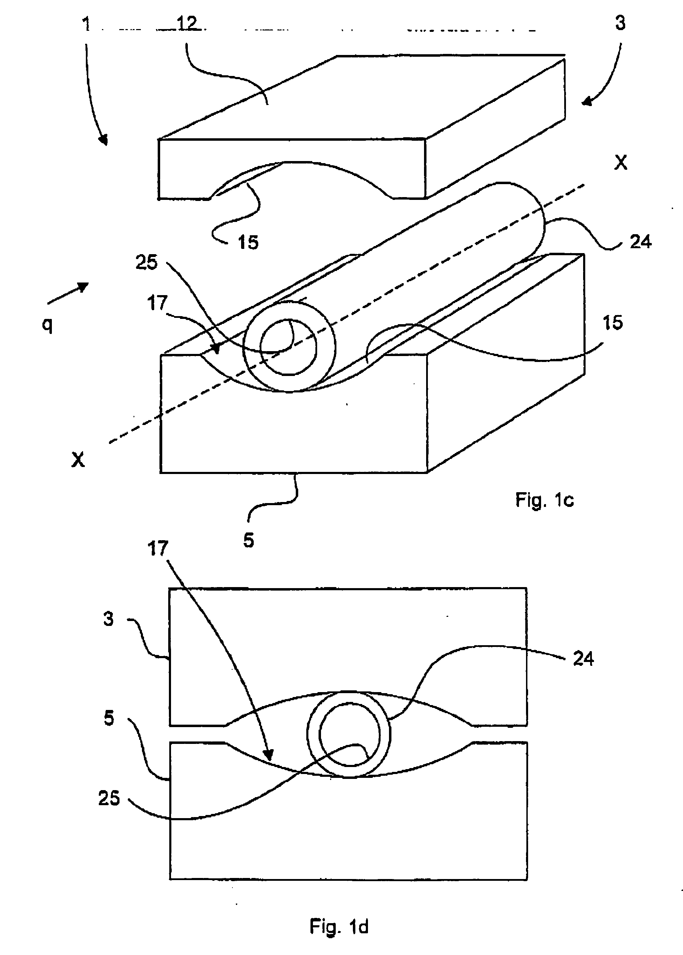

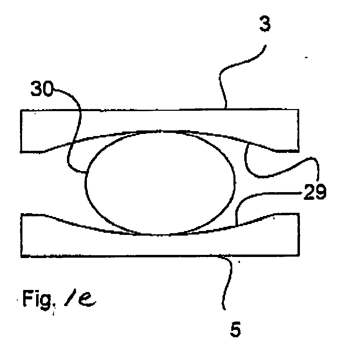

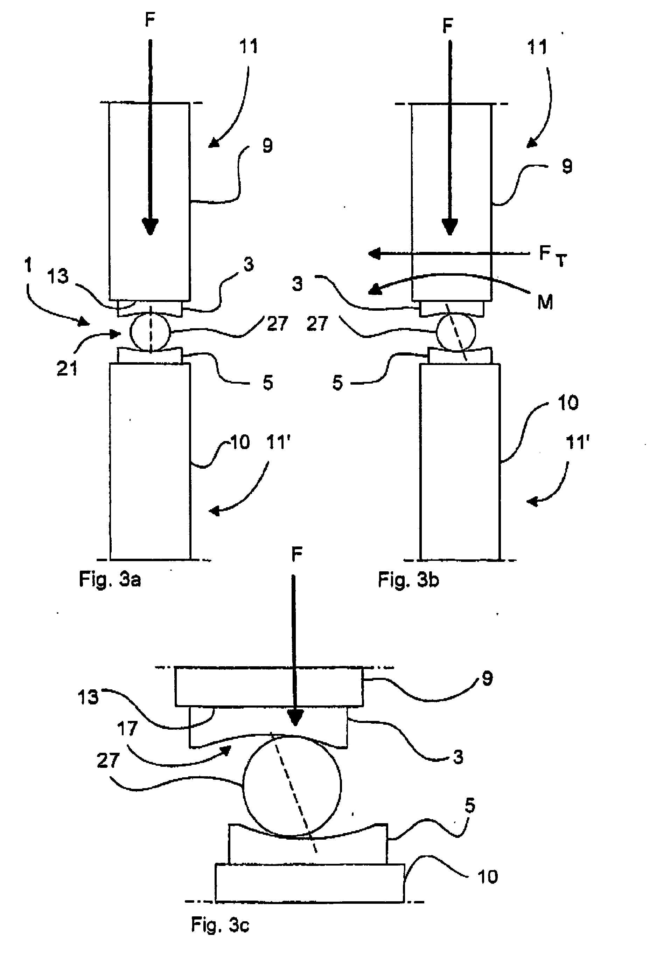

Fig. 1a and Fig. 1b show a first embodiment of the invention. A connection device 1 according to what is shown in Fig. 1 comprises a first and a second receiving member 3, 5, such as steel plates 7. These can be mounted on an essentially panel-shaped element (9, 10, see Figs 3a-3c) such as, for example, a wall unit 11 (see Figs 3a-3b), which is described in greater detail in the abovementioned concurrent Swedish patent application. The receiving member 3, 5 is then mounted with one 12 of its sides against a contact surface 13 of said wall unit 11. The two receiving members 3, 5 are each designed with an elongate groove 15 on those sides of the receiving members 3, 5 which face one another, which grooves 15 form receiving surfaces 17 for a connecting means 19, such as a bearing body 21. In Fig. 1a, the bearing body 21 is designed as a homogeneous circular cylinder 23 with an imaginary axis X-X. Fig. 1b shows a front view of the connection device 1 in Fig. 1a in the direction of the arrow p. It is clear here that the radius of the cylinder 23 (not shown by any reference designation) is considerably smaller than the radius of curvature which characterizes the groove 15. The bearing body 21 is arranged rollably between the receiving surfaces 17 of the receiving members 3, 5, so that vibration, principally in the direction transverse to the plane of the panel-shaped element 9, 10, of one panel-shaped element 9 is prevented from being transmitted to the other panel-shaped element 10.

Fig. 1c and Fig. 1d show a second embodiment of the invention. What is shown in Figs 1a and 1b corresponds broadly to what is shown in Figs 1c and 1d. Components corresponding to those in Figs 1a and 1b have therefore not been indicated by any reference designation. What distinguishes this embodiment from the first is that a circular cylinder 24 has an elongate through-bore 25, the centre axis of which coincides with the imaginary axis X-X. Wiring (not shown) can be run through the bore 25. Fig. 1d shows a front view in the direction of the arrow q in Fig. 1c.

The connection device 1 is designed to take up static loads vertically, at the same time as it allows a movement of the wall units 11 in the horizontal direction transverse to the plane of the panel-shaped element 9, 10. The sound propagation direction in a wall unit 11 goes from one floor (not shown) to another.

Fig. 1e shows a homogeneous cylinder 30 similar to that shown in Fig. 1b, but with an oval cross section. According to such an embodiment, the assembly work can be made easier, because the cylinder 30 does not roll away during the construction of a building or the like.

Fig. 3a shows diagrammatically a front view of the connection device 1 and how it is connected to two panel-shaped elements 9, 10. A static load F acts on one panel-shaped element 9, which load is transmitted via the connection device 1 to the other panel-shaped element 10.

The static load F has its direction through the cylinder 23, and the receiving members 3, 5 along a plane which coincides with the panel-shaped elements 9, 10. It should be pointed out that the panel-shaped elements 9, 10 can also be bowed and curved.

The illustration in Fig. 3a shows a rest position.

When sound, for example foot impact sound, is propagated through one panel-shaped element 9, the latter is imparted an oscillatory motion or vibration in the direction transverse to the plane of this panel-shaped element 9. This is shown in Fig. 3b. Field quantities, such as a transverse force F_{T} and a moment M, arise at right angles to a sound propagation direction and in the direction along a normal (not shown) to the plane of the panel-shaped element 9. The invention therefore makes it possible for one panel-shaped element 9 to move in the direction transverse to the plane of the element relative to the other element 10, while the other element 10 remains stationary. The displacement shown in Fig. 3b of one element 9 relative to the other element 10 is greatly enlarged. In reality, the movement is barely visible to the naked eye. The propagation of structure-borne sound waves from one panel-shaped element 9 to the other panel-shaped element 10 is thus prevented. Fig. 3c shows an enlargement of what is shown in Fig. 3b.

The displacement is greatly exaggerated for the sake of clarity.

As mentioned in the introduction, the invention is not limited to the construction industry, but can also be used within other industries, such as the automotive industry, other manufacturing industry etc.

## Claims

1. Use of a connection device for bringing about connection and sound insulation between two essentially panel-shaped wall units (11,11') mounted and standing on one another which connection device (1) is arranged between said wall units (11,11') and comprises two receiving members (3, 5) between which at least one connecting means is arranged in order to make possible displacement of the wall units (11,11') relative to one another, **characterized by** that the connecting means is a cylinder (23), each receiving receiving member (3, 5) has a receiving surface (17) designed as an elongate groove (15), the cylinder (23) interacting with the receiving members (3, 5) in order to bring about the displacement, the cylinder (23) is arranged rollably on the receiving surfaces (17) of each receiving member (3, 5), so that vibration of one wall unit (11) is prevented from being transmitted to the other wall unit (11') for preventing propagation of structure-borne sound waves from one wall unit to the other wall unit.

2. Use of a connection device according to Claim 1, **characterized in that** the connection device (1) is designed to take up static loads (F) in a direction through the cylinder (23) along a plane which coincides with the essentially panel-shaped elements (9, 10), while the cylinder (23) is essentially undeformable at said static loads.

3. Use of a connection device according to claim 1 or 2, **characterized in that** the cylinder (23) is a circular cylinder (24) with an elongate through-bore (25).

4. Use of a connection device according to any one of claims 1-3, **characterized in that** at least one of the receiving members (3, 5) and/or the cylinder (23, 24) is made of metal or of another hard material.

5. Use of a connection device according to any one of the preceding claims, **characterized in that** the essentially panel-shaped wall units (11,11') are in a building or the like.

## Patentansprüche

1. Verwendung einer Verbindungsvorrichtung zum Herbeiführen einer Verbindung und Schallisolation zwischen zwei im Wesentlichen plattenförmigen Wandeinheiten (11, 11'), die aufeinander stehen und montiert sind, welche Verbindungsvorrichtung (1) zwischen den Wandeinheiten (11, 11') angeordnet ist und zwei Aufnahmeelemente (3, 5) aufweist, zwischen denen zumindest ein Verbindungsmittel angeordnet ist, um eine Verschiebung der Wandeinheiten (11, 11') relativ zueinander zu ermöglichen, **dadurch gekennzeichnet, dass** das Verbindungsmittel ein Zylinder (23) ist, wobei jedes aufnehmende Aufnahmeelement (3, 5) eine Aufnahmeoberfläche (17) aufweist, die als eine längliche Nut (15) gestaltet ist, wobei der Zylinder (23) mit den Aufnahmeelementen (3, 5) zusammenwirkt, um die Verschiebung herbeizuführen, wobei der Zylinder (23) rollbar auf den Aufnahmeoberflächen (17) jedes Aufnahmeelements (3, 5) angeordnet ist, so dass eine Vibration einer Wandeinheit (11) daran gehindert wird, auf die andere Wandeinheit (11') übertragen zu werden, um eine Übertragung von Körperschallwellen von einer Wandeinheit auf die andere Wandeinheit zu verhindern.

2. Verwendung einer Verbindungsvorrichtung nach Anspruch 1, **dadurch gekennzeichnet, dass** die Verbindungsvorrichtung (1) gestaltet ist, um statische Lasten (F) in einer Richtung durch den Zylinder (23) entlang einer Ebene aufzunehmen, die mit den im Wesentlichen plattenförmigen Elementen (9, 10) zusammenfällt, während der Zylinder (23) bei den statischen Lasten im Wesentlichen undeformierbar ist.

3. Verwendung einer Verbindungsvorrichtung nach Anspruch 1 oder 2, **dadurch gekennzeichnet, dass** der Zylinder (23) ein Kreiszylinder (24) mit einer länglichen Durchgangsbohrung (25) ist.

4. Verwendung einer Verbindungsvorrichtung nach einem der Ansprüche 1 bis 3, **dadurch gekennzeichnet, dass** zumindest eins der Aufnahmeelemente (3, 5) und/oder der Zylinder (23, 24) aus Metall oder einem anderen harten Material gemacht ist.

5. Verwendung einer Verbindungsvorrichtung nach einem der vorgehenden Ansprüche, **dadurch gekennzeichnet, dass** die im Wesentlichen plattenförmigen Wandeinheiten (11, 11') in einem Gebäude oder dergleichen sind.

## Revendications

1. Utilisation d'un dispositif de raccordement pour établir un raccordement et un isolement sonore entre deux unités de paroi (11, 11') essentiellement en forme de panneaux montés et s'appuyant l'une sur l'autre, lequel dispositif de raccordement (1) est aménagé entre lesdites unités de paroi (11, 11') et comprend deux éléments de réception (3, 5), entre lesquels au moins un moyen de raccordement est aménagé pour rendre possible le déplacement des unités de paroi (11, 11') l'une par rapport à l'autre, **caractérisée en ce que** le moyen de raccordement est un cylindre (23), chaque élément de réception (3, 5) ayant une surface de réception (17) conçue sous la forme d'une rainure allongée (15), le cylindre (23) interagissant avec les éléments de réception (3, 5) pour provoquer le déplacement, le cylindre (23) est aménagé de manière à pouvoir tourner sur les surfaces de réception (17) de chaque élément de réception (3, 5) de sorte que la vibration d'une unité de paroi (11) ne puisse être transmise à l'autre unité de paroi (11') pour empêcher la propagation d'ondes sonores portés par la structure d'une unité de paroi à l'autre unité de paroi.

2. Utilisation d'un dispositif de raccordement selon la revendication 1, **caractérisée en ce que** le dispositif de raccordement (1) est conçu pour absorber des charges statiques (F) dans une direction à travers le cylindre (23) le long d'un plan qui coïncide avec les éléments essentiellement en forme de panneaux (9, 10), tandis que le cylindre (23) est essentiellement indéformable auxdites charges statiques.

3. Utilisation d'un dispositif de raccordement selon la revendication 1 ou 2, **caractérisée en ce que** le cylindre (23) est un cylindre circulaire (24) avec un trou traversant allongé (25).

4. Utilisation d'un dispositif de raccordement selon l'une quelconque des revendications 1 à 3, **caractérisée en ce qu'**au moins un des éléments de réception (3, 5) et/ou le cylindre (23, 24) est ou sont fabriqués en métal ou dans un autre matériau dur.

5. Utilisation d'un dispositif de raccordement selon l'une quelconque des revendications précédentes, **caractérisée en ce que** les unités de paroi (11, 11') essentiellement en forme de panneaux sont installées dans un édifice ou analogue.
